Europäisches Patentamt

**European Patent Office**

**Office européen des brevets**

(11) Numéro de publication: **0 006 778**
A1

(12) # DEMANDE DE BREVET EUROPEEN

(21) Numéro de dépôt: **79400343.4**

(22) Date de dépôt: **31.05.79**

(51) Int. Cl.³: **B 67 D 5/34,** F 16 K 31/34,
G 01 F 25/00

(30) Priorité: **09.06.78 FR 7817358**

(43) Date de publication de la demande: **09.01.80**
**Bulletin 80/1**

(84) Etats contractants désignés: **BE GB IT**

(71) Demandeur: Société dite: **SOCIETE NOUVELLE SAM, 5
rue Magenta, F-93500 Pantin (FR)**

(72) Inventeur: **Lacoste, Claude, 12 rue Gabriel Fauré,
F-78400 Chatou (FR)**

(74) Mandataire: **Barnay, André François Cabinet Barnay
et al, 80 rue Saint-Lazare, F-75009 Paris (FR)**

(54) **Dispositif limiteur de remplissage d'un réservoir de stockage.**

(57) La présente invention concerne un dispositif de sécurité pour réservoir. Un dispositif limiteur de remplissage
d'un réservoir pour liquide, comportant notamment une
vanne d'arrêt hydraulique, est caractérisé par le fait que
ladite vanne comporte une chambre (8) de contrôle qui,
quand sa pression interne est sensiblement égale à la pression du flux du liquide à arrêter, est fermée aux moyen
d'un clapet (3) dont le siège vient s'appliquer contre la
paroi de la vanne sous l'action d'un ressort (9) placé dans
ladite chambre de contrôle.

Application à la manipulation de tous liquides et aux
réservoirs d'hydrocarbures notamment.

0006778

1

Dispositif limiteur de remplissage d'un réservoir de stockage.

La présente invention concerne un dispositif limiteur de remplissage d'un réservoir de stockage, ce dispositif comportant notamment une vanne de fermeture hydraulique.

La manipulation de produits liquides de toutes sortes (liquides pétroliers, chimiques, alimentaires, eau, etc...) comporte en général une étape de remplissage de réservoirs de stockage au moyen d'une liaison flexible entre la tuyauterie d'alimentation d'un réservoir et un camion citerne de livraison. Malgré une surveillance poussée, il peut arriver que se produise un trop plein de réservoir, un épandage du produit sur le sol au moment de la séparation entre réservoir et citerne, ou d'autres incidents provoquant une pollution désagréable ou des accidents plus sérieux, en particulier lors du stockage de liquides inflammables tels que l'essence, le gas-oil, le fuel oil domestique, etc...

De nouvelles normes antipollution très strictes relatives aux produits pétroliers interdisent le débordement des réservoirs ainsi que le déversement de liquide lors du démontage de la partie flexible de liaison entre la tuyauterie d'alimentation du réservoir et la citerne de transport. En outre, la vidange de la partie flexible de liaison est obligatoire avant le débranchement des tuyauteries.

On connaît déjà des dispositifs pour éviter le débordement des liquides lors du remplissage des réservoirs. On a décrit divers systèmes commandés par des flotteurs. On a aussi mentionné des agencements munis d'un clapet actionné par une membrane séparant une chambre inférieure d'alimentation et une chambre supérieure de contrôle reliée à un flotteur qui, en position haute, provoque la fermeture du clapet et l'arrêt du remplissage. La vidange de la liaison flexible entre la tuyauterie d'alimentation et la citerne se fait par un passage entre la chambre d'alimentation et le tube de remplissage, cette fuite n'étant pas **contrôlée** et pouvant provoquer le débordement de la cuve.

Cependant, de tels dispositifs sont encombrants et compliqués. De plus, ils ne permettent pas la vidange de la liaison flexible ou bien, quand celle-ci est effectuée, elle n'est pas contrôlée.

La présente invention a pour but de remédier à ces inconvénients.

Un but de la présente invention est donc de contrôler et d'arrêter en particulier le remplissage de réservoirs alimentés par une tuyauterie, ainsi que l'écoulement du liquide dans une tuyauterie.

Pour cela, on utilise une vanne de fermeture hydraulique selon l'invention.

Cette vanne comporte notamment une chambre de contrôle qui, quand sa pression interne est sensiblement égale à la pression du flux du liquide à arrêter, est fermée au moyen d'un clapet dont le siège vient s'appliquer contre la paroi de la vanne sous l'action d'un ressort placé dans ladite chambre de contrôle. Ledit clapet est guidé dans la direction du flux de liquide par une tubulure creuse et est solidaire hermétiquement d'une membrane sensiblement perpendiculaire au flux de liquide et fixée au moyen d'un presse membrane, ladite membrane et ledit presse membrane formant ladite chambre de contrôle. Ledit clapet s'ouvre quand la pression du liquide est suffisante pour contrecarrer sensiblement la pression régnant dans la chambre de contrôle et l'action dudit ressort, la plus grande partie du liquide passant entre le clapet et le corps de vanne, tandis que le reste du liquide passe par la tubulure creuse, pénètre dans la chambre de contrôle et sort par un orifice prévu dans ladite chambre de contrôle, ledit orifice pouvant être fermé au moyen d'un robinet ou d'un organe détecteur de niveau. Ladite chambre de contrôle comporte en outre un trou de fuite calibrée qui, quand l'orifice de la chambre de contrôle est fermé et quand le flux de liquide est interrompu en aval de ladite vanne au moyen d'un organe de fermeture, permet la vidange du liquide restant dans ladite chambre et entre le clapet et ledit organe de fermeture.

L'organe détecteur de niveau comporte un fourreau ouvert à chaque extrémité dans lequel est situé un flotteur commandant un poussoir actionnant un clapet bille qui, quand le flotteur parvient à un niveau $N_1$ déterminé correspondant au niveau maximum de remplissage du réservoir, ferme ledit orifice de la chambre de contrôle. La partie basse dudit fourreau est fermée par un clapet commandé depuis l'extérieur dudit fourreau qui permet le remplissage dudit fourreau par le liquide s'échappant de l'orifice de la chambre de contrôle et la fermeture de la vanne sans atteindre réellement le niveau $N_1$. Le niveau $N_2$ supérieur dudit clapet bille ne permet plus l'ouverture de la vanne et correspond sensiblement audit niveau $N_1$ plus un certain volume permettant plusieurs desdites vidanges. Ladite vanne peut se trouver à l'intérieur du réservoir ainsi que l'organe détecteur de niveau. Ladite vanne peut aussi se trouver à l'extérieur du réservoir, l'organe détecteur de niveau pouvant se trouver à l'intérieur du réservoir et être relié à ladite vanne par un conduit flexible ou rigide.

4

La description qui va suivre, en regard des dessins annexés à titre d'exemples non limitatifs, permettra de bien comprendre comment la présente invention peut être mise en pratique.

La figure 1 représente une vanne d'arrêt selon la présente invention.

La figure 2 représente un mode de réalisation du dispositif selon l'invention limitant le remplissage par camion citerne d'un réservoir.

La figure 3 représente une variante du mode de remplissage.

La figure 4 représente plus en détail le dispositif selon l'invention muni d'un organe détecteur de niveau.

La figure 5 représente le dispositif selon l'invention agencé à l'extérieur du réservoir et muni d'un organe détecteur de niveau placé dans le réservoir.

La figure 6 représente un autre mode de réalisation de l'organe détecteur de niveau du dispositif selon l'invention.

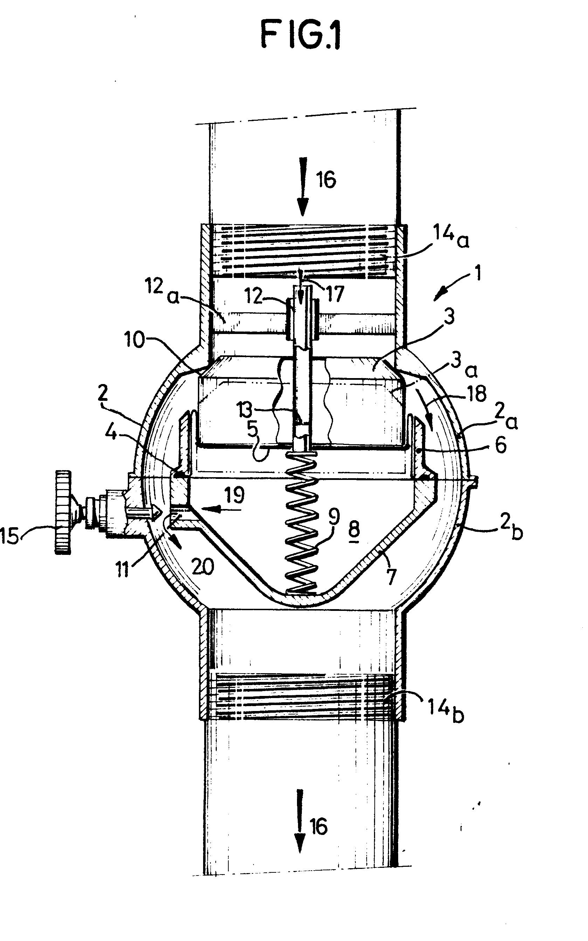

Tous les dispositifs limiteurs de remplissage d'un réservoir sont munis d'une vanne d'arrêt hydraulique selon la figure 1.

Cette vanne 1 se compose d'un corps 2 en deux parties 2a et 2b, d'un clapet 3 monté étanche sur une membrane 4 par une plaquette de serrage 5. La membrane 4 s'enroule et se déroule sur la chemise 6 fixe par rapport au corps 2. La membrane qui comporte un joint d'embase circulaire est maintenue étanche sur la chemise 6 par le presse membrane 7 formant ainsi une chambre 8. Un ressort 9 maintient le clapet 3 fermé par application sur le siège 10. La chambre 8 comporte un orifice 11 de fuite de section supérieure à celle de l'orifice 13. Le clapet 3 est guidé d'une part par la membrane 4 et d'autre part par une tubulure creuse 12 (maintenue par le support 12a) dont la section de passage est déterminée suivant celle du clapet 3.

A l'intérieur de la tubulure creuse 12 se trouve un petit orifice 13 de section déterminée suivant celle du siège 10 du clapet 3. La vanne 1 comporte des filetages 14a et 14b sur ses parties cylindriques appartenant respectivement aux moitiés 2a et 2b, permettant le raccordement de tuyauteries à la vanne. A l'aide du robinet 15 on peut fermer ou ouvrir l'orifice 11. Le raccordement des tuyauteries à la vanne peut se faire aussi par des raccords à brides, vissés ou taraudés.

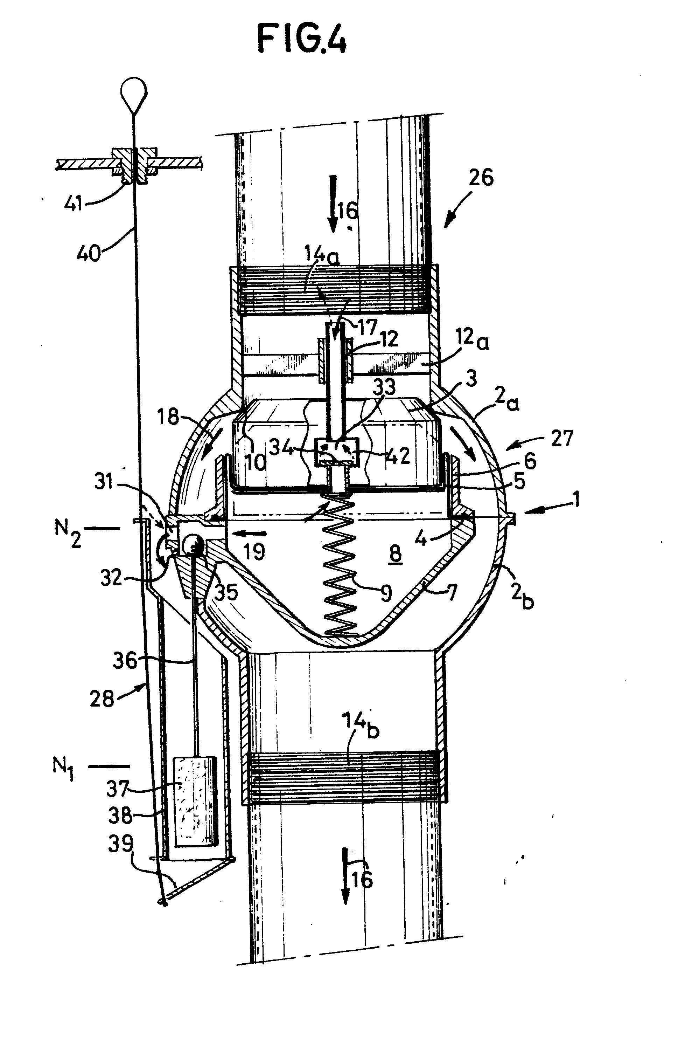

Le fonctionnement de la vanne est le suivant : le liquide qui circule dans le sens des flèches 16 rentre dans le corps de la vanne et ouvre le clapet 3 (venant en position 3a) qui était auparavant fermé par le ressort 9. Ce dernier cause une perte de charge qui oblige une partie du liquide à passer par le petit orifice 13, suivant la flèche 17. L'autre partie du liquide passe entre le corps de vanne et le clapet suivant la flèche 18. Le liquide, depuis l'orifice 13, arrive dans la chambre 8, puis sort de la chambre 8 par l'orifice 11 suivant les flèches 19 et 20 pour parvenir à l'intérieur (figure 1) ou à l'extérieur de la vanne (figure 4). Si à l'aide d'un robinet 15, ou de tout autre dispositif, on ferme l'orifice 11, la pression monte dans la chambre 8. La section de la membrane 4 étant supérieure à celle du clapet 3, celui-ci est poussé par la membrane 4 et vient arrêter avec une très grande douceur l'écoulement du liquide. La pression du liquide n'influence pas le fonctionnement. La pression d'utilisation est déterminée par la robustesse de la construction des appareils. La vanne d'arrêt ainsi réalisée présente deux caractéristiques particulières :

1) fermeture commandée par un organe de petite dimension et à très faible couple ou effort de manoeuvre;

2) fermeture très douce du clapet principal.

De plus, cette vanne permet le réglage du débit par ouverture ou fermeture partielle de l'orifice de fuite 11.

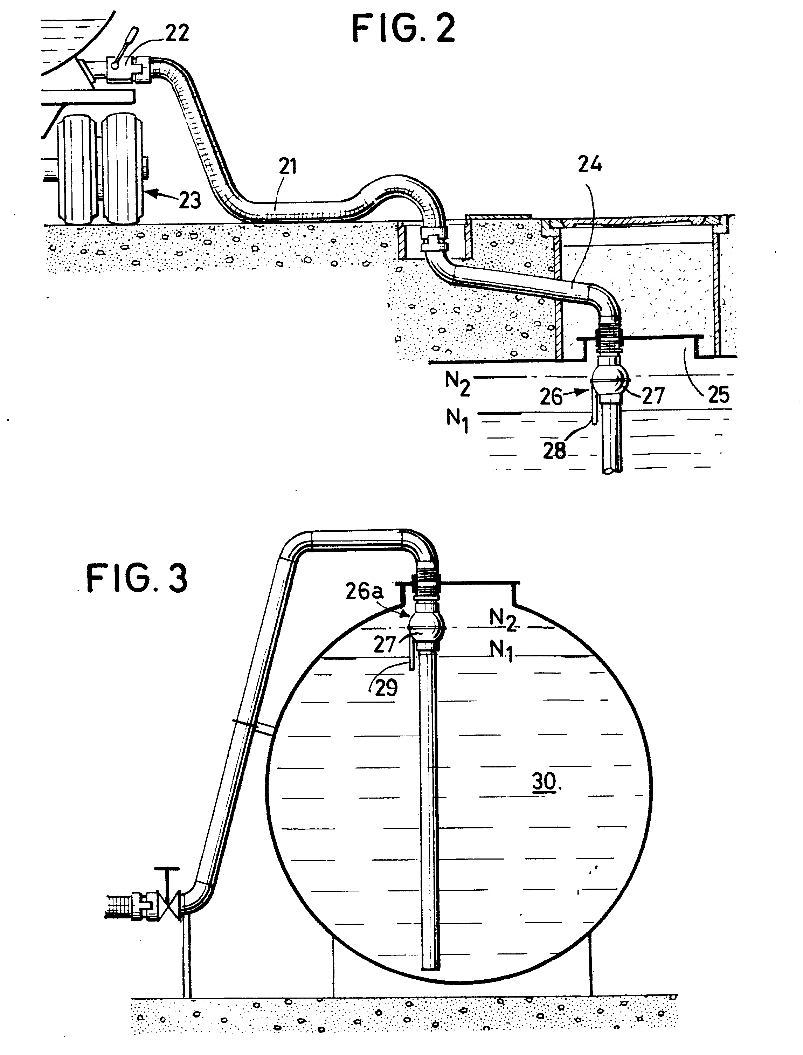

Sur la figure 2 on voit que le remplissage des réservoirs de stockage de liquide se fait par liaison flexible 21 entre la vanne 22 du camion citerne de livraison 23 et la tuyauterie d'alimentation 24 du réservoir 25. Ce réservoir 25 est souterrain. Le dispositif limiteur de remplissage 26 selon l'invention comporte une vanne d'arrêt 27, décrite plus en détail sur la figure 4, munie d'un organe détecteur de niveau 28. Ce dispositif limiteur de remplissage 26 est placé à l'intérieur du réservoir 25 de stockage, arrête le remplissage du réservoir lorsque le liquide arrive au maximum prédéterminé $N_1$ et permet la vidange automatique du flexible de liaison et de la tuyauterie de remplissage sans débrancher aucune partie des tuyauteries en éliminant ainsi tous risques de pollution et d'accidents. L'appareil est équipé de façon à pouvoir contrôler son bon fonctionnement sans nécessairement atteindre le niveau maximum de remplissage. Le niveau $N_2$ est prédéterminé et correspond au niveau $N_1$ plus un certain volume de sécurité permettant de vidanger plusieurs fois le flexible 21 et la tuyauterie 24.

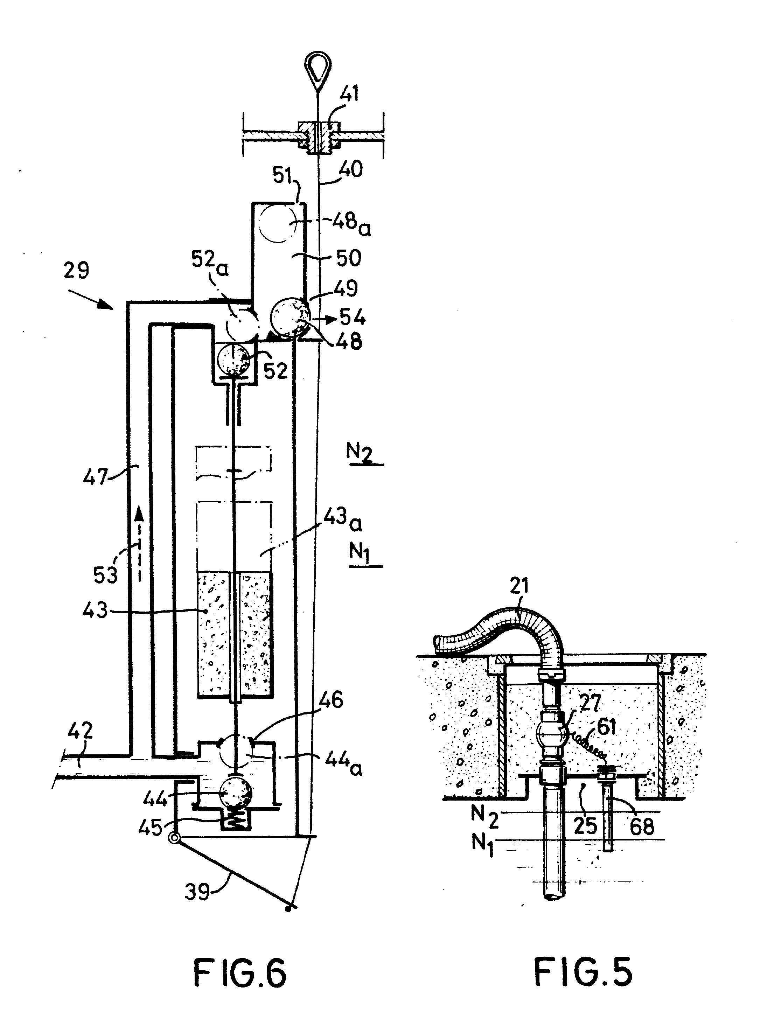

La figure 3 représente une variante du mode de remplissage. Celui-ci se fait par pompage puisque le réservoir n'est pas enterré. Le dispositif limiteur de remplissage 26a comporte une vanne d'arrêt 27 et un organe détecteur de niveau 29. De plus, le dispositif limiteur de remplissage se trouve à l'intérieur du réservoir 30 de stockage. Sur la figure 5, on voit que le dispositif limiteur de remplissage peut comporter une vanne d'arrêt 27 à l'extérieur du réservoir 25 et un organe détecteur de niveau 68 à l'intérieur du réservoir de stockage, la vanne et l'organe détecteur de niveau étant reliés par un conduit 61 flexible ou rigide.

La figure 4 représente plus en détail le dispositif

limiteur de remplissage 26 selon l'invention, utilisé notamment pour des réservoirs enterrés et constitué d'une vanne d'arrêt 27 et d'un organe détecteur de niveau 28. La vanne d'arrêt 27 est un autre mode de réalisation de la vanne représentée sur la figure 1. Elle se compose d'un corps 1 en deux parties 2a et 2b, d'un clapet 3 monté étanche sur une membrane 4 par une plaquette de serrage 5. La membrane 4 s'enroule et se déroule dans la chemise 6 fixe par rapport au corps 1. La membrane qui comporte un joint d'embase circulaire est maintenue étanche sur la chemise 6 par le presse membrane 7 formant ainsi une chambre 8. Un ressort 9 maintient le clapet 3 fermé par application sur le siège 10. La chambre 8 communique avec l'extérieur de la tuyauterie de remplissage par l'orifice 31 de section déterminée suivant celle du siège 10. Le clapet 3 est guidé d'une part par la membrane 4 et d'autre part par une tubulure creuse 12 (maintenue par le support 12a) dont la section de passage est déterminée suivant celle du clapet 3. A l'intérieur du clapet 3 est agencé un petit clapet 33 qui est appliqué sur son siège par son propre poids. Ce clapet est percé d'un petit trou 34 calibré suivant la section du siège 10. L'orifice 31 peut être fermé par un clapet bille 35 qui se déplace sous l'action du poussoir 36 commandé par le flotteur 37 placé dans un fourreau 38 ouvert à chaque extrémité. La partie basse du fourreau 38 peut-être fermée par un clapet 39 commandé par un câble ou une tringle 40 qui sort à l'extérieur du réservoir par un passage étanche 41 fixé sur le couvercle ou la partie supérieure du réservoir.

Lorsque le liquide atteint le niveau $N_1$, le flotteur 37 par l'intermédiaire du poussoir 36 soulève le clapet bille 35 qui vient fermer l'orifice 31. Le cycle de fermeture du clapet 3 se fait alors comme décrit pour le fonctionnement de la vanne de la figure 1.

Tant que la pression est maintenue en amont de l'appareil, le clapet 3 reste fermé. Après fermeture de la vanne du camion citerne, la pression chute dans la chambre 8 par le trou de fuite calibrée 32. Sous la pression du liquide, le clapet 3 s'ouvre et la décompression de la chambre 8 entraîne la retombée du clapet bille 35. L'air nécessaire à la vidange de la tuyauterie rentre par l'orifice 31, soulève dans le sens des flèches 42 le clapet 33 de section égale à l'orifice 31 et pénètre ainsi dans la tuyauterie de remplissage par la tubulure creuse 12 à un niveau supérieur au siège 10, condition impérative pour la vidange. Le cycle vidange/entrée d'air peut ainsi s'établir et la tuyauterie se vidange seule. Pour vidanger le ou les flexibles qui peuvent se trouver en contrepente, il suffit de soulever les parties en contrepente.

Si, par erreur, on vient remplir de nouveau le réservoir, le flotteur 37 est toujours levé, le clapet bille 35 ferme l'orifice 31 et le clapet 3 se referme. Il faut alors procéder à la vidange du flexible. En répétant plusieurs fois l'opération, le liquide atteint le niveau dit $N_2$ qui correspond au niveau supérieur du clapet bille 35. A partir de ce niveau, l'air ne rentre plus et la vidange du flexible est arrêtée. Il devient impossible de remettre du liquide dans le réservoir.

Si l'appareil est placé à l'intérieur d'un réservoir fermé, il est souhaitable de vérifier son bon fonctionnement. Le dispositif testeur représenté sur la figure 4 permet le contrôle en cours de remplissage sans être obligé d'atteindre le niveau $N_1$. Ce mode de contrôle simule le fonctionnement réel.

En tirant le câble ou la tringle 40, on ferme le clapet 39 et le liquide qui s'écoule de l'orifice 31 remplit le fourreau 38. Le flotteur 37 monte, le poussoir 36 amène le clapet bille 35 sur l'orifice 31
et le clapet 3 se ferme comme il est indiqué précédemment. Le remplissage du réservoir ne peut continuer que
si l'on ferme la vanne du camion ou de la tuyauterie
d'alimentation pour simuler la vidange et permettre la
décompression de la chambre 8 et la retombée du clapet
bille 35.

La figure 6 représente un autre mode de réalisation
de l'organe détecteur de niveau selon l'invention. Cet
organe détecteur de niveau 29 est utilisé lorsque le
remplissage se fait par pompe. Un agencement particulier du contrôleur de niveau permet la vidange de la
tuyauterie. L'orifice 42 est branché sur l'orifice 31
de l'appareil représenté sur la figure 4. Lorsque le
liquide soulève le flotteur 43 (position 43a), il libère la bille 44 qui, poussée par le ressort 45 (position 44a), vient fermer l'orifice 46. Le liquide passe
alors par le conduit 47 selon la flèche 53 et vient
plaquer, selon la flèche 54, la bille flottante 48 sur
son siège 49 fermant ainsi tout écoulement de liquide,
ce qui fait monter la pression dans la chambre 8 et
fermer le clapet 3 (figure 4). Au-dessus du siège 49
de la bille flottante 48 se trouve une cavité 50 qui
se remplit, l'air s'échappant par l'orifice 51. Pour
vidanger la tuyauterie d'alimentation, il faut fermer
la vanne placée à la sortie de la pompe (figure 3).
Au bout de quelques secondes, la pression chute par
la fuite permanente 51 et libère la bille flottante 48
qui s'élève dans la cavité 50 et prend la position 48a.
On peut alors ouvrir la vanne de sortie de pompe, remettre la pompe en marche et faire une prise d'air en
amont de la pompe. La vidange s'effectue tant qu'il y a
présence de liquide dans la chambre 50. Si l'opération
se répète plusieurs fois, le flotteur 43 continue de
monter et vient soulever la bille 52 en position 52a
qui arrête l'écoulement de liquide interdisant toute
vidange.

10

## REVENDICATIONS

1.- Dispositif limiteur de remplissage d'un réservoir pour liquide, comportant notamment une vanne d'arrêt hydraulique caractérisé par le fait que ladite vanne comporte une chambre de contrôle qui, quand sa pression interne est sensiblement égale à la pression du flux du liquide à arrêter, est fermée au moyen d'un clapet dont le siège vient s'appliquer contre la paroi de la vanne sous l'action d'un ressort placé dans ladite chambre de contrôle, ladite chambre de contrôle comportant en outre un trou de fuite calibrée qui, quand l'orifice de la chambre de contrôle est fermé et quand le flux de liquide est interrompu en aval de ladite vanne au moyen d'un organe de fermeture, permet la vidange du liquide restant dans ladite chambre et entre le clapet et ledit organe de fermeture.

2.- Dispositif selon la revendication 1, caractérisé par le fait que ledit clapet est guidé dans la direction du flux liquide par une tubulure creuse et est solidaire hermétiquement d'une membrane sensiblement perpendiculaire au flux de liquide et fixée au moyen d'un presse membrane, ladite membrane et ledit presse membrane formant ladite chambre de contrôle.

3.- Dispositif selon la revendication 1 ou 2, caractérisé par le fait que ledit clapet s'ouvre quand la pression du liquide est suffisante pour contrecarrer sensiblement la pression régnant dans la chambre de contrôle et l'action dudit ressort, la plus grande partie du liquide passant entre le clapet et le corps de vanne tandis que le reste du liquide passe par la tubulure creuse, pénètre dans la chambre de contrôle et sort par un orifice prévu dans ladite chambre de contrôle, ledit orifice pouvant être fermé au moyen d'un robinet ou d'un organe détecteur de niveau.

4.- Dispositif selon l'une quelconque des revendications 1 à 3, caractérisé par le fait que l'organe détecteur de niveau comporte un fourreau ouvert à chaque extrémité dans lequel est situé un flotteur commandant un poussoir actionnant un clapet bille qui, quand le flotteur parvient à un niveau $N_1$ déterminé correspondant au niveau maximum de remplissage du réservoir, ferme ledit orifice de la chambre de contrôle.

5.- Dispositif selon la revendication 4, caractérisé par le fait que la partie basse dudit fourreau est fermée par un clapet commandé depuis l'extérieur dudit fourreau, ledit clapet permettant le remplissage dudit fourreau par le liquide s'échappant de l'orifice de la chambre de contrôle et la fermeture de la vanne, sans atteindre réellement le niveau $N_1$.

6.- Dispositif selon l'une quelconque des revendications 1 à 5, caractérisé par le fait que le niveau $N_2$ supérieur dudit clapet bille ne permet plus l'ouverture de la vanne et correspond sensiblement audit niveau $N_1$ plus un certain volume permettant plusieurs desdites vidanges.

7.- Dispositif selon l'une quelconque des revendications 1 à 6, caractérisé par le fait que ladite vanne se trouve à l'intérieur du réservoir ainsi que l'organe détecteur de niveau.

8.- Dispositif selon l'une quelconque des revendications 1 à 6, caractérisé par le fait que ladite vanne se trouve à l'extérieur du réservoir et que l'organe détecteur de niveau se trouve à l'intérieur du réservoir et est relié à ladite vanne par un conduit flexible ou rigide.

9.- Vanne d'arrêt hydraulique selon l'une quelconque des revendications 1 à 3.

# FIG.1

# FIG. 2

22

23

21

24

$N_2$

26 27 25

$N_1$

28

# FIG. 3

26a

27

29

$N_2$

$N_1$

30.

0006778

# FIG.4

0006778

FIG.6

FIG.5

## DOCUMENTS CONSIDERES COMME PERTINENTS

| Catégorie | Citation du document avec indication, en cas de besoin, des parties pertinentes | Revendication concernée |
|---|---|---|
| | US - A - 3 893 475 (G.D. HUDSON) <br> * Figures 1,4 * <br> -- | 1-4 |
| | FR - A - 2 341 807 (RELLUMIT INTERNATIONAL) <br> * Figures 1,5,7 * <br> -- | 1,3,4, 6,7 |
| | FR - A - 2 311 239 (W.E. KADEN) <br> * Figures 5,6 * <br> -- | 1-3 |
| | US - A - 2 599 498 (C.R. SUSKA) <br> * Figures * <br> -- | 1-4 |
| | US - A - 4 056 133 (E.M. DETERS) <br> * Figures 2,4,5 * <br> -- | 1-3 |
| | GB - A - 823 979 (AVERY-HARDOLL LTD.) <br> * Figures 2-4 * <br> -- | 1-4,7 |
| | US - A - 3 033 246 (E.L. CIVEROLO) <br> * Figures 1,9 * <br> -- | 1-4,8 |
| | FR - A - 2 321 113 (CIE. FRANCAISE DE RAFFINAGE) <br> * Figures 1-3; page 8 * <br> ---- | |

**CLASSEMENT DE LA DEMANDE (Int. Cl.3)**

B 67 D 5/34
F 16 K 31/34
G 01 F 25/00

1

**DOMAINES TECHNIQUES RECHERCHES (Int. Cl.2)**

B 67 D 5/34
F 16 K 31/34
G 01 F 25/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | |
|---|---|
| Χ | Le présent rapport de recherche a été établi pour toutes les revendications |

| Lieu de la recherche | Date d'achèvement de la recherche | Examinateur |
|---|---|---|
| La Haye | 19-09-1979 | THIBO |